# EUROPEAN PATENT SPECIFICATION

(11) **EP 3 068 665 B1**
(45) Date of publication and mention of the grant of the patent: **30.12.2020**
(21) Application number: 14861505.7
(22) Date of filing: 10.11.2014
(51) Int. Cl.: B60R 21/231, B64D 11/06

(54) **AIRCRAFT SEAT WITH TAXI, TAKEOFF AND LANDING LIE FLAT POSITION CAPABILITY**
FLUGZEUGSITZ MIT TAXI-, START- UND LANDE-POSITIONIERUNGSFÄHIGKEIT
SIÈGE D'AVION COMPORTANT UNE CAPACITÉ DE POSITION COUCHÉE À PLAT POUR LE TAXI, LE DÉCOLLAGE ET L'ATTERRISSAGE

(30) Priority: 12.11.2013 US 201361902967 P
(43) Date of publication of application: 21.09.2016
(73) Proprietor: B/E Aerospace, Inc., Wellington, FL 33414 (US)
(72) Inventor: WYSS, Alen, Winston-salem, NC 27106 (US)
(74) Representative: Algemeen Octrooi- en Merkenbureau B.V.
(86) International application number: PCT/US2014/064801
(87) International publication number: WO 2015/073363

(56) References cited:
- DE-A1-102010 020 642
- GB-A- 2 480 008
- US-A- 5 716 026
- US-A- 5 716 026
- US-A- 5 884 968
- US-A- 6 152 400
- US-A1- 2001 000 639
- US-A1- 2003 204 909
- US-A1- 2006 022 087
- US-A1- 2013 106 080
- US-B1- 8 523 220
- US-B2- 7 699 263
- US-B2- 7 712 831
- US-B2- 8 540 275
- US-B2- 8 556 291
- US-B2- 8 573 634

## Description

### Technical Field and Background of the Invention

The present invention relates to premium class airline passenger seats. One such type of seat is one that is able to adjust between upright and flat seating positions to provide passenger comfort and comply with taxi, take-off and landing seating position requirements. Such passenger seats typically include a seat back and seat pan, linked in motion, supported by a frame and adjustable to the desired seating position by way of a seat recline mechanism.

Another type of premium class seat may include various combinations of a lie flat seat, retractable armrests, bed extension work space and ottoman to create a horizontal space envelope for sleeping. This horizontal space envelope provides an angled sleeping position with a fully forward facing lounge seating position with full recline functionality. The seat arrangement may also provide an aisle side opening closet, sliding privacy screen, minibar, single piece retracting table, integral luggage storage area and wide-screen display monitor in a configuration for business and first class travel.

In both types of seating as presently installed in passenger aircraft, the passenger is required to be seated and restrained by a lap belt in a full upright position for taxi, takeoff, landing, and at any time during flight when so instructed by the flight crew. Only after safety announcements, takeoff and climb to altitude are passengers generally permitted to recline the seat to a lie flat position for rest or sleep. This is necessary because of safety requirements that are dictated by the structure of the seat and the nature of the restraint devices that stabilize the passenger and protect against or minimize injury in the event of turbulence or crash.

US patent application US5716026 discloses a modular pedestal raising every other row of seats with their corresponding cross-aisle walkways at a sufficient height to provide legroom for floor level sitter, said module incorporating a legrest extension for upper level sitter, including the means for affixing state-of-the-art safety, sanitary and conveniency devices, such as safety crash-absorbing air bags and high-security kevlar lining, oxygen dispensers, purge vents and ultra-violet light outlets to cleanse the environment, moveable and adjustable footrests, eating-writing surfaces, and audio-visual entertainment and communications devices., all seats, both floor and split-level, being accessed from the same floor surface. The manner following convention of mounting arrays of massed seats at floor level is improved upon by elevating alternate rows of seats by means of said modular devices. Document US2001/000639 discloses a shell and a seat configured for a lie-flat position.

On some air routes on which premium lie flat seating is available, the amount of time allotted to sleep is restricted due to the total time between takeoff and landing, and the time required to board the aircraft, stow early-on luggage, provide safety announcements, take off and climb to altitude. For example, in a flight having a total flight time of six hours, as much as two hours of that time may be taken up with boarding, providing safety announcements, climbing to cruising altitude and then preparing for landing. A passenger desiring to sleep in a fully reclined position must wait until permission is granted to transition the seat into the lie flat position. This is because of the requirement that the seat back remain upright during these portions of the flight which, in turn, is required because the construction of the seat and the passenger restraints provided in current seating designs. Therefore, a substantial amount of time that a passenger might otherwise be able to sleep in a reclined position is not available.

With the exception of medical emergency flights where the patient is tightly strapped to a stretcher, it is not currently permitted for a commercial aircraft passenger to assume a reclined, lie flat position during taxi, takeoff and landing. Use of a seat designed to permit the passenger to take a lie flat position before takeoff would permit the passenger, if desired, to go to sleep even before takeoff. On flights of specific duration, passengers to be seated in premium seating areas could eat a meal, listen to safety instructions and undertake any other necessary tasks or functions immediately before boarding the aircraft, and upon boarding take his or her assigned seat, recline the seat to a lie flat position and go to sleep even before taxi and takeoff. This enhanced capability would appeal to a certain segment of the flying public willing to pay extra for the ability to rest and/or sleep in a prone position for a longer period of time during the flight. In general, a series of air bags that are inflatable to provide protective cushioning during sleep and deflated and retracted when the passenger is not in the lie flat position would be provided as an integral part of the seating structure.

A separate reason for providing the ability to reside in a prone position during taxi, takeoff and landing is to provide enhanced safety to passengers traveling in premium class seating areas. If properly restrained, a lie flat, prone position can provide greater protection against injury by surrounding the passenger with a series of deployable air bags similar to those present in motor vehicles. In other words, an impact instantaneously deploys one or more air bags, which immediately deflate in order to permit egress from the aircraft.

### Summary of the Invention

It is therefore an object of the present invention to provide a lie flat premium aircraft seat that permits a passenger to reside in a lie flat, prone position during taxi, takeoff and landing.

It is a further object of the invention to provide a lie flat premium aircraft seat equipped with means to provide crash protection to a passenger residing in a lie flat, prone position in a passenger seat.

According to one embodiment of the invention, an aircraft passenger seat according to claim 1 is provided.

In accordance with a further embodiment of the invention, the air bags are single use air bags that include a sensor and trigger that instantaneously inflates the air bags in the event of an abrupt deceleration sufficient to cause the sensor to deliver a signal to the trigger.

In accordance with the invention, the head rest, seat back, seat bottom and leg rest are positioned within a fixed position shell having at least one major aisle-adjacent wall oriented in alignment with a longitudinal axis of the aircraft, and further wherein the head rest, seat back, seat bottom and leg rest are oriented at an oblique angle to the longitudinal axis of the aircraft.

In accordance with a further embodiment of the invention, the head rest, seat back, seat bottom and leg rest are arranged whereby a passenger occupying the seat faces forward generally in the direction of forward travel of the aircraft.

In an example not being part of the present invention, a plurality of seats are positioned in an arrangement whereby the seats are oriented at an oblique angle to the longitudinal axis of the aircraft and are positioned in a staggered array with the head rest, seat back, seat bottom and leg rest of a first seat angularly offset to an adjacent second seat.

In accordance to an example not being part of the present invention, a side-facing aircraft passenger seat is provided, having a head rest, seat back, seat bottom and leg rest moveable between an upright seating position and a lie flat sleeping position, and includes a plurality of air bags positioned in at least partially surrounding orientation in relation to the seat and inflatable to provide protection to a seat occupant while in the lie flat sleeping position. The head rest, seat back, seat bottom and leg rest are positioned within a fixed position shell having at least one major aisle-adjacent wall oriented in alignment with a longitudinal axis of the aircraft, and oriented at an oblique angle to the longitudinal axis of the aircraft. The head rest, seat back, seat bottom and leg rest are arranged whereby a passenger occupying the seat faces forward generally in the direction of forward travel of the aircraft.

### Brief Description of the Drawing Figures

The present invention is best understood when the following detailed description of the invention is read with reference to the accompanying drawings, in which:

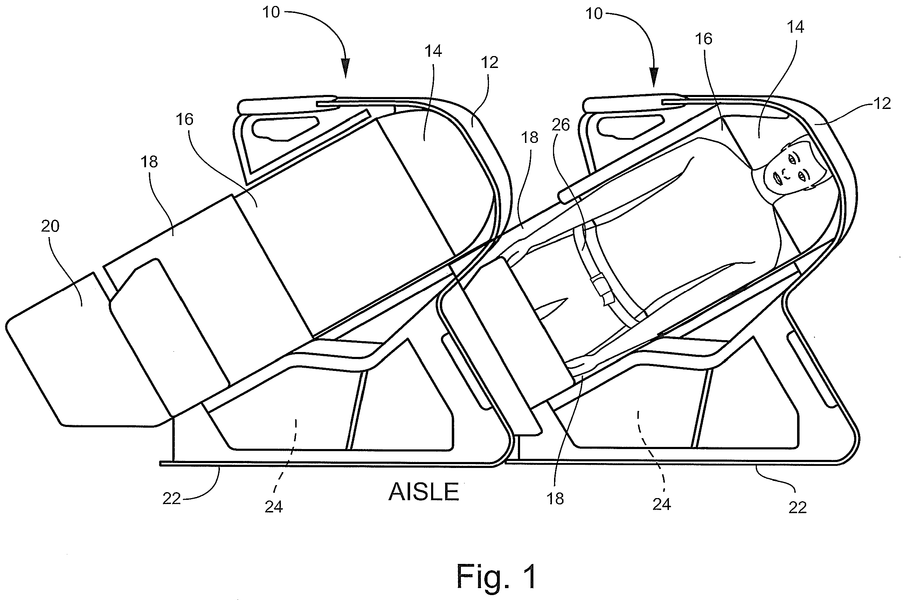

Figure 1 is a top plan view of a pair of aisle access lie flat seats according to one embodiment of the invention;
Figure 2 is horizontal cross-sectional view of the seats according to shown in Figure1, illustrating the position of stabilizing air bags; and
Figure 3 is a top perspective view of the cross-section of the pair of aisle access lie flat seats shown in Figure 2.

### Detailed Description of the Preferred Embodiment

Referring now specifically to the drawings, a pair of lie flat aisle access aircraft seats 10 is shown. The seats 10 each include a fixed position shell 12 within which is positioned a head rest 14, seat back 16, a seat bottom 18 and a leg rest 20. The shells 12 of the seats 10 include aisle-adjacent segments 22 that extend along and define the longitudinal axis of the aircraft. Thus, the head rests 14, seat backs 16, seat bottoms 18 and leg rests 20 are side facing at an oblique angle to the longitudinal axis of the aircraft. The angled orientation substantially reduces the possibility and/or extent of "submarining" in the event of a crash or other abrupt deceleration.

The areas between the aisle-adjacent segments 22 define wells 24 that allow the legs and feet of the passengers to extend forwardly to occupy the areas between the aisle-adjacent segments 22 and the seat bottoms 18 and leg rests 20. The wells 24 are enclosed on the top surface by passenger convenience features such as retractable tables and the like and serve to restrain forward movement of the passenger. As in conventional seats, a lap belt 26 provides a further restraint to the passenger.

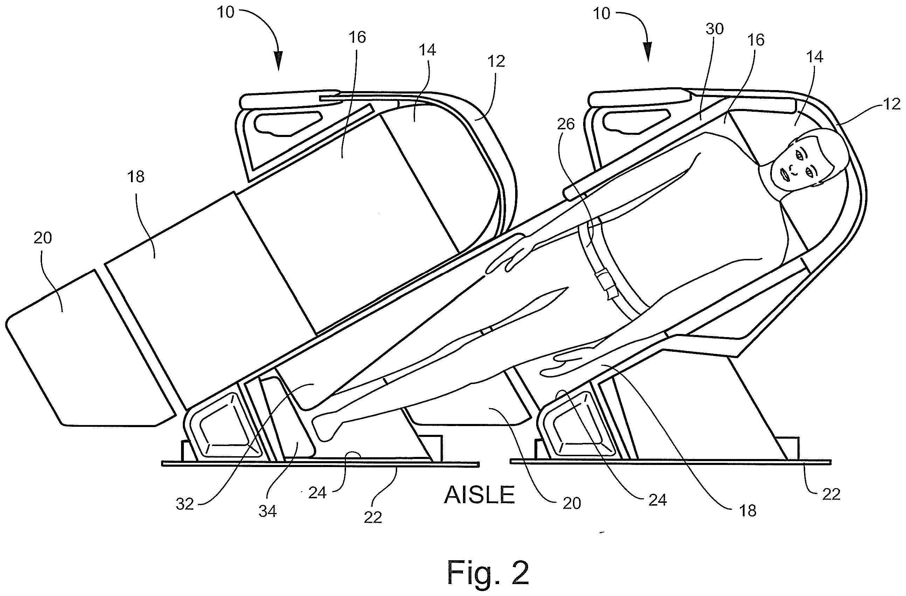

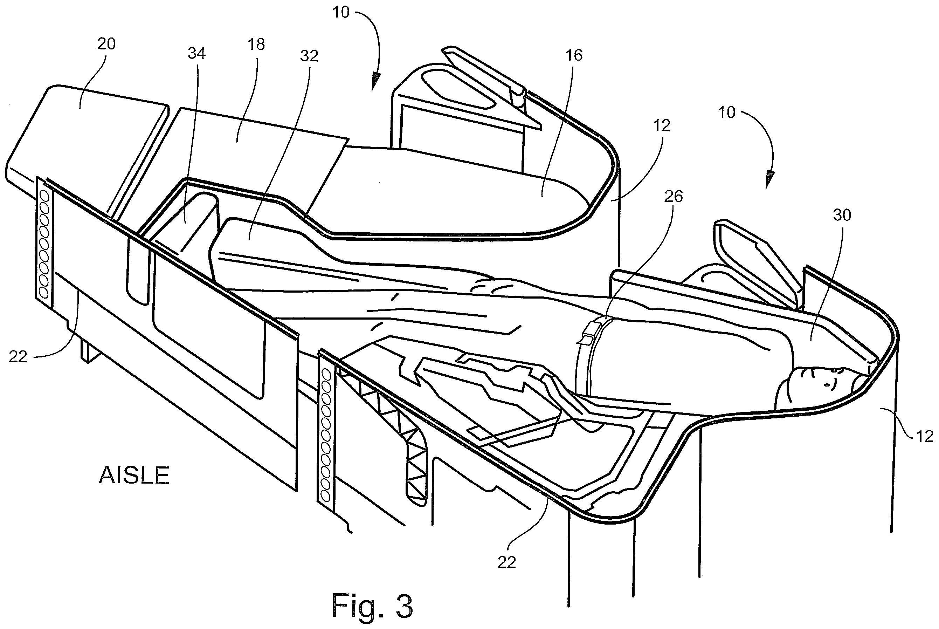

Referring now to Figures 2 and 3, with the well 24 of the occupied seat 10 shown, three air bags 30, 32 and 34 are shown. Air bag 30 is a long, narrow curtain-style air bag that, when inflated, occupies space between the occupant and the right side of the shell 12. Air bag 32 is a long, narrow structure that is positioned to inflate to the side and above the lower extremity of the seat occupant to occupy space in the well 24 and to cushion the passenger against forward movement along the longitudinal axis of the aircraft. Air bag 34 is a small bolster-type structure that provides a cushioning barrier between the feet and legs of the seat occupant and the forward end of the well 24.

The air bags 30, 32, 34 are "single use" devices provided only for impact protection in the event of a crash or other abrupt deceleration. In a manner similar to vehicle air bags, a deceleration exceeding a specified g-force causes the air bags 30, 32, 34 to instantaneously inflate and then deflate to permit egress by the seat occupant. The air bag mechanism includes a sensor and trigger that instantaneously inflates the air bags 30, 32, 34 in the event of an abrupt deceleration sufficient to cause the sensor to deliver a signal to the trigger. Note that the air bags 32 and 34 are on the side of the seat 10 away from the aisle in order not to interfere with egress.

A lie flat premium aircraft seat that permits a passenger to reside in a lie flat, prone position during taxi, takeoff and landing according to the invention has been described with reference to specific embodiments and examples. Various details of the invention may be changed without departing from the scope of the invention. Furthermore, the foregoing description of the preferred embodiments of the invention and best mode for practicing the invention are provided for the purpose of illustration only and not for the purpose of limitation, the invention being defined by the claims.

## Claims

1. An aircraft passenger seat (10) being orientated in an oblique angle to the longitudinal axis of an aircraft when installed within an aircraft cabin and including a well (24) and a fixed position shell (12) within which is positioned a head rest (14), seat back (16), seat bottom (18) and leg rest (20) and being moveable between an upright seating position and a lie flat sleeping position, and including a plurality of air bags (30, 32, 34) being inflatable to provide protection to a seat occupant while in the lie flat sleeping position, wherein the air bags are positioned in at least partially surrounding orientation in relation to the seat (10), wherein a first air bag (30) is positioned to, when inflated, occupy space between an occupant of the seat and the right side of the shell (12), respectively, to cushion the seat occupant against injury resulting from forward movement along the longitudinal axis of the aircraft, a second air bag (32) is positioned to inflate to the side and above a lower extremity of the seat occupant to occupy space in the well (24), and a third air bag (34) of a small bolster-type structure that is positioned to provide a cushioning barrier between feet and legs of the seat occupant and the forward end of the well (24).

2. An aircraft passenger seat (10) according to claim 1, wherein the first air bag (30) is a long, narrow curtain-style air bag and/or wherein the second air bag (32) is a long, narrow structure that when inflated is configured to cushion the passenger against forward movement.

3. An aircraft passenger seat according to claim 1 or 2, wherein the air bags (30, 32, 34) are single use air bags that include a sensor and a trigger that instantaneously inflates the air bags in the event of an abrupt deceleration sufficient to cause the sensor to deliver a signal to the trigger.

## Patentansprüche

1. Flugzeugpassagiersitz (10), der in einem schrägen Winkel zu der Längsachse eines Flugzeugs ausgerichtet ist, wenn er in einem Flugzeug eingebaut ist, und einen Fußraum (24) und eine Schale (12) mit festgelegter Position aufweist, in der eine Kopfstütze (14), eine Rückenlehne (16), ein Sitzuntergestell (18) und eine Beinauflage (20) positioniert sind und die zwischen einer aufrechten Sitzposition und einer flachliegenden Schlafposition beweglich ist, und eine Vielzahl von Airbags (30, 32, 34) aufweist, die entfaltbar sind, um einen Insassen des Sitzes zu schützen, während dieser sich in der flachliegenden Schlafposition befindet, wobei die Airbags in mindestens teilweise umgebender Ausrichtung in Bezug auf den Sitz (10) positioniert sind, wobei ein erster Airbag (30) so positioniert ist, dass er im entfalteten Zustand Raum zwischen einem Insassen des Sitzes und der rechten Seite der Schale (12) einnimmt beziehungsweise den Insassen des Sitzes gegen eine sich aus einer Vorwärtsbewegung entlang der Längsachse des Flugzeugs ergebende Verletzung abpolstert, ein zweiter Airbag (32) so positioniert ist, dass er sich zur Seite und über einer unteren Extremität des Insassen des Sitzes entfaltet, um Raum im Fußraum (24) einzunehmen, und ein dritter Airbag (34) mit einer kleinen, polsterartigen Struktur so positioniert ist, dass er eine Abpolsterungsbarriere zwischen Füßen und Beinen des Insassen des Sitzes und dem vorderen Ende des Fußraums (24) bereitstellt.

2. Flugzeugpassagiersitz (10) nach Anspruch 1, wobei der erste Airbag (30) ein langer, schmaler, vorhangartiger Airbag ist und/oder wobei der zweite Airbag (32) eine lange, schmale Struktur ist, die im entfalteten Zustand dazu ausgestaltet ist, den Passagier gegen eine Vorwärtsbewegung abzupolstern.

3. Flugzeugpassagiersitz nach Anspruch 1 oder 2, wobei die Airbags (30, 32, 34) Einweg-Airbags sind, die einen Sensor und einen Auslöser aufweisen, der die Airbags bei einer abrupten Verlangsamung, die dazu hinreichend ist, den Sensor zur Abgabe eines Signals an den Auslöser zu veranlassen, unverzüglich entfaltet.

## Revendications

1. Siège passager d'aéronef (10) étant orienté selon un angle oblique par rapport à l'axe longitudinal d'un aéronef lorsqu'il est installé à l'intérieur d'une cabine d'aéronef et comportant une cavité (24) et une coque à position fixe (12) à l'intérieur de laquelle sont positionnés un appui-tête (14), un dossier de siège (16), un fond de siège (18) et un repose-jambes (20) et pouvant se déplacer entre une position assise verticale et une position couchée à plat, et comportant une pluralité de coussins gonflables (30, 32, 34) pouvant être gonflés pour assurer la protection d'un occupant de siège lorsqu'il est en position couchée à plat, où les coussins gonflables sont positionnés dans une orientation au moins partiellement environnante par rapport au siège (10), où un premier coussin gonflable (30) est positionné pour, lorsqu'il est gonflé, occuper un espace entre un occupant du siège et le côté droit de la coque (12), respectivement, pour protéger l'occupant du siège contre les blessures résultant d'un mouvement vers l'avant le long de l'axe longitudinal de l'aéronef, un deuxième coussin gonflable (32) est positionné pour se gonfler sur le côté et au-dessus d'une extrémité inférieure de l'occupant de siège pour occuper un espace dans la cavité (24), et un troisième coussin gonflable (34) d'une structure de type petit traversin qui est positionné pour fournir une barrière d'amortissement entre les pieds et les jambes de l'occupant de siège et l'extrémité avant de la cavité (24).

2. Siège passager d'aéronef (10) selon la revendication 1, dans lequel le premier coussin gonflable (30) est un coussin gonflable de style rideau étroit et long et/ou dans lequel le deuxième coussin gonflable (32) est une structure longue et étroite qui, lorsqu'il est gonflé, est configuré pour protéger le passager contre un mouvement vers l'avant.

3. Siège passager d'aéronef selon la revendication 1 ou 2, dans lequel les coussins gonflables (30, 32, 34) sont des coussins gonflables à usage unique qui comportent un capteur et un déclencheur qui gonfle instantanément les coussins gonflables en cas de décélération brusque suffisante pour amener le capteur à fournir un signal au déclencheur.
